# EUROPÄISCHE PATENTSCHRIFT

(11) **EP 1 718 428 B1**
(45) Veröffentlichungstag und Bekanntmachung des Hinweises auf die Patenterteilung: **29.08.2007**
(21) Anmeldenummer: 04790921.3
(22) Anmeldetag: 27.10.2004
(51) Int. Cl.: B22D 17/22, B22D 17/24, F02F 1/24, F02F 1/42

(54) **VERFAHREN ZUR HERSTELLUNG EINES EINTEILIGEN ZYLINDERKOPFS FÜR DIESELMOTOREN DURCH DRUCKGIESSEN UND DRUCKGUSSFORM ZUR VERWENDUNG IN DEM VERFAHREN**
METHOD FOR PRODUCING A ONE-PIECE CYLINDER HEAD FOR DIESEL ENGINES BY DIE-CASTING, AND DIE-CASTING MOLD FOR USE IN THIS METHOD
PROCEDE POUR REALISER UNE CULASSE MONOBLOC DESTINEE A DES MOTEURS DIESEL, PAR MOULAGE SOUS PRESSION, ET MOULE DE MOULAGE SOUS PRESSION UTILISE DANS LE CADRE DU PROCEDE

(30) Priorität: 26.02.2004 DE 102004009312
(43) Veröffentlichungstag der Anmeldung: 08.11.2006
(73) Patentinhaber: Motorenfabrik Hatz GmbH & Co. KG, 94099 Ruhstorf (DE)
(72) Erfinder: URMANN, Armin, 94094 Rotthalmünster (DE)
(74) Vertreter: Grättinger & Partner (GbR)
(86) Internationale Anmeldenummer: PCT/EP2004/012147
(87) Internationale Veröffentlichungsnummer: WO 2005/084851

(56) Entgegenhaltungen:
- EP-A- 0 146 254
- DE-A1- 2 418 215
- DE-A1- 3 523 194
- DE-A1- 19 502 342
- DE-C1- 4 342 139

## Beschreibung

Die vorliegende Erfindung betrifft einen Druckguss-Drallkanal für einen einteiligen Zylinderkopf für einen Dieselmotor. Insbesondere betrifft sie ein Verfahren zum Herstellen eines Zylinderkopfs für einen Dieselmotor durch Druckgießen, sowie eine Druckgussform zur Verwendung in dem Verfahren zur Herstellung des Zylinderkopfs.

Bei einem derartigen Zylinderkopf ist der Auslasskanal für die Verbrennungsgase gießtechnisch unproblematisch herzustellen, während der Einlasskanal für die Verbrennungsluft wegen eines als Drallkanal ausgebildeten Abschnitts besondere gießtechnische Maßnahmen erfordert.

Ein derartiger Drallkanal ist in Form einer Helix ausgebildet, um hierdurch die Drallzahl der während des Ansaughubs angesaugten Luft zur Verbesserung der Gemischbildung im Brennraum zu erhöhen.

Solche Zylinderköpfe für Dieselmotoren werden bislang meist im Kokillenguss oder Sandguss hergestellt, wobei für die Ausformung des Drallkanals Sandkerne eingesetzt werden, die bei der Entfernung zerstört werden.

Wünschenswert ist die Herstellung eines derartigen Zylinderkopfs im kostengünstigeren Druckgussverfahren, bei welchem die Kerne nach dem Gießen gezogen werden. Nach dem deutschen Patent DE 43 42 139 C1, auf dessen Gegenstand in vollem Umfang Bezug genommen wird, ist die Herstellung eines derartigen Zylinderkopfs mit dem Druckgussverfahren bereits beschrieben. Bei dem dort gezeigten Verfahren kommt eine Druckgussform zum Einsatz, bei welcher zum Ausformen des Einlasskanals ein aus zwei Schiebern bestehender Kern vorgesehen ist, wobei ein erster Schieber mit seitlicher Ausziehrichtung im wesentlichen dem nach außen führenden Abschnitt eines Drallkanals entspricht und ein zweiter Schieber mit parallel zur Zylinderachse verlaufender Ausziehrichtung im wesentlichen einem auf der Rückseite des Einlassventils angeordneten Drallraum zuzüglich einem in den Drallraum mündenden, inneren Abschnitt des Drallkanals entspricht.

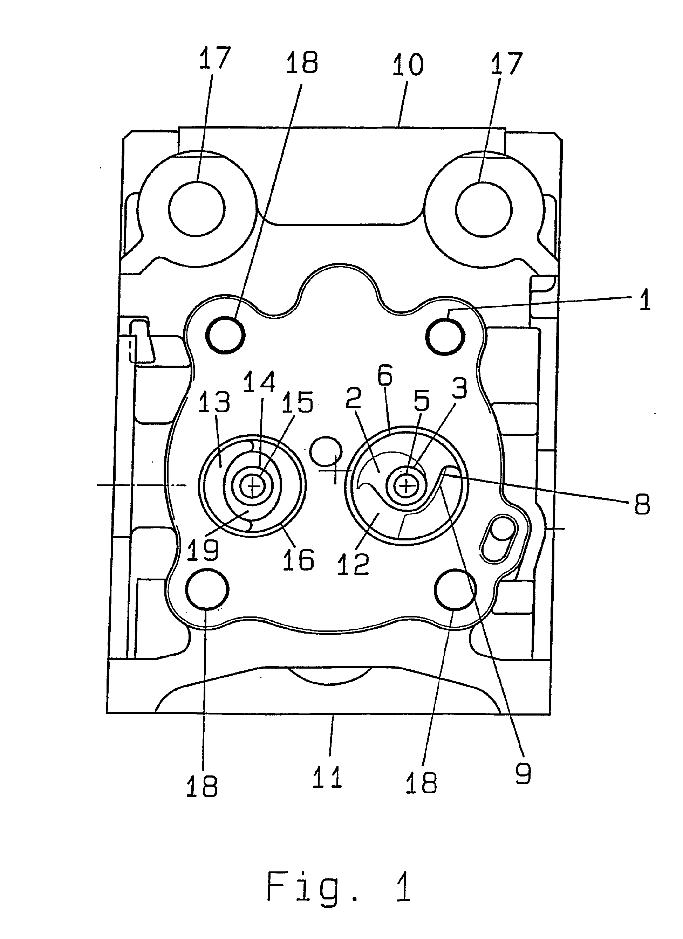

Bei der Druckgussform gemäß dem bekannten Verfahren stimmt die Trennlinie der beiden Druckguss-Schieber mit der Lage einer so genannten "Drallkante" überein (siehe insbesondere dortige Fig. 1). Bei dieser Drallkante handelt es sich um die Mündung eines in Bezug auf den Drall krümmungsinnenseitig (d. h. auf der Innenseite der Helix) angeordneten Innenabschnitt der den Drallkanal umgrenzenden Konturfläche in die den Drallraum umgrenzende Konturfläche. Im Unterschied zum Außenabschnitt des Drallkanals, welcher in Bezug auf den Drall krümmungsaussenseitig angeordnet ist und tangential in den Drallraum mündet, mündet der dem Außenabschnitt gegenüberliegende Innenabschnitt des Drallkanals an einer Kante in den Drallraum.

Es hat sich in der Praxis jedoch als äußerst nachteilig erwiesen, wenn die Trennlinie der beiden Druckguss-Schieber mit der Lage der Drallkante übereinstimmt, da sich ein Grat an der Trennlinie der beiden Schieber ausbildet, welcher entfernt werden muss. Da die Drallzahl jedoch empfindlich von der Geometrie der Drallkante abhängt, erfordert das Entgraten eine hohe Genauigkeit hinsichtlich der hierbei einzuhaltenden Toleranzen. Derartige Toleranzen zur Gewährleistung einer vergleichsweise geringen Streuung der Drallzahl liegen bevorzugt im Bereich zwischen 1/20 und 1/5 mm. In der Massenfertigung ist dies jedoch nur mit einem hohen personellen und zeitlichen Aufwand zu bewältigen, da die Trennlinie jedes gegossenen Zylinderblocks bislang manuell nachbearbeitet werden muss. Hierdurch erhöhen sich die Fertigungskosten merklich.

Demgegenüber besteht die Aufgabe der vorliegenden Erfindung darin, ein Verfahren zum Herstellen durch Druckgießen eines einteiligen Zylinderkopfs für einen Dieselmotor, bzw. eine Druckgussform zur Verwendung in einem solchen Verfahren, zur Verfügung zu stellen, bei welchem auf eine kosten- und zeitaufwändige Nachbearbeitung der Trennlinie der beiden Druckguss-Schieber unter Einhaltung von strengen Toleranzvorgaben verzichtet werden kann.

Diese Aufgabe wird nach dem Vorschlag der Erfindung durch ein Verfahren gemäß den Merkmalen von Anspruch 1, bzw. eine Druckgussform gemäß den Merkmalen von Anspruch 2, gelöst. Vorteilhafte Ausgestaltungen der Erfindung sind durch die Merkmale der Unteransprüche angegeben.

Erfindungsgemäß ist ein Verfahren zum Herstellen durch Druckgießen eines einteiligen Zylinderkopfs für einen Dieselmotor angegeben, welcher Zylinderkopf mit einem Einlasskanal für die Verbrennungsluft und einem Auslasskanal für das Abgas ausgerüstet ist. Der Einlasskanal setzt sich aus einem auf der Rückseite eines Einlassventils angeordneten Drallraum und einem in den Drallraum tangential einmündenden Drallkanal zusammen, wobei ein in Bezug auf den Drall krümmungsaussenseitig angeordneter Außenabschnitt der den Drallkanal umgrenzenden Konturfläche tangential in die den Drallraum umgrenzende Konturfläche übergeht, während ein in Bezug auf den Drall krümmungsinnenseitig angeordneter Innenabschnitt der den Drallkanal umgrenzenden Konturfläche an einer Drallkante in die den Drallraum umgrenzende Konturfläche mündet. Bei dem erfindungsgemäßen Verfahren wird eine Druckgussform eingesetzt, in welcher zum Ausformen des Einlasskanals ein aus zwei Schiebern mit gemeinsamen Trennflächen bestehender Kern eingeschoben wird, nämlich ein erster Schieber mit seitlicher Ausziehrichtung, der im wesentlichen dem Drallkanal entspricht und ein zweiter Schieber mit parallel zur Zylinderachse verlaufender Ausziehrichtung, der im wesentlichen dem Drallraum zuzüglich einem in den Drallraum mündenden inneren Abschnitt des Drallkanals entspricht. Das erfindungsgemäße Verfahren zeichnet sich nun dadurch aus, dass die Drallkante lediglich durch den zweiten Schieber ausgeformt wird. Hierdurch kann in vorteilhafter Weise auf eine zur Erzielung einer hohen Drallzahl genaue Toleranzvorgaben einhaltende, aufwändige Nachbearbeitung des an der Trennlinie der beiden Schieber entstandenen Grats verzichtet werden. Vielmehr erweist sich eine Gratbildung aufgrund des räumlichen Abstands zur Drallkante als unproblematisch.

Bei einer in dem erfindungsgemäßen Verfahren eingesetzten, erfindungsgemäßen Druckgussform ist zum Ausformen des Einlasskanals ein aus zwei Schiebern mit gemeinsamen Trennflächen bestehender Kern vorgesehen, nämlich ein erster Schieber mit seitlicher Ausziehrichtung, der im wesentlichen dem Drallkanal entspricht und ein zweiter Schieber mit parallel zur Zylinderachse verlaufender Ausziehrichtung, der im wesentlichen dem Drallraum zuzüglich einem in den Drallraum mündenden inneren Abschnitt des Drallkanals entspricht. Erfindungsgemäß zeichnet sich die Druckgussform dadurch aus, dass der zweite Schieber eine Negativform für eine an der Mündung des in Bezug auf den Drall krümmungsinnenseitig angeordneten Innenabschnitts der den Drallkanal umgrenzenden Konturfläche in die den Drallraum umgrenzende Konturfläche angeordnete Drallkante aufweist. Auf diese Weise ist es möglich, dass die Drallkante durch lediglich einen Druckgussschieber ausgeformt wird, so dass in vorteilhafter Weise eine Gratbildung an der Drallkante vermieden und eine der Negativform entsprechende, maßhaltige Ausformung der Drallkante erreicht wird.

Bei einer vorteilhaften Ausgestaltung der erfindungsgemäßen Druckgussform weist eine die gemeinsamen Trennflächen umgebende Trennlinie der beiden Schieber einen Abstand von wenigstens 2 mm von der Negativform der Drallkante auf. Durch den vorgegebenen räumlichen Abstand kann ein sich beim Gießen an der die Trennflächen der beiden Schieber umgebenden Trennlinie bildender Grat ohne nennenswerten Einfluss auf die Drallzahl und ohne ansonsten notwendige, genaue Toleranzvorgaben in besonders einfacher Weise entgratet werden.

Ferner ist es vorteilhaft, wenn ein die Trennfläche umgebender Randbereich einer jeden der gemeinsamen Trennflächen der beiden Schieber wenigstens teilweise als zueinander passende Passform abgeschrägt ist. Hierbei weisen die Abschrägungen vorteilhaft eine senkrecht zu der eine Trennfläche umgebenden Randlinie gerichtete Breite von wenigstens 2 mm auf. Hierdurch kann erreicht werden, dass die randständigen Stoßflächen der beiden Schieber vergrößert werden, wodurch die Lebensdauer der Schieber deutlich erhöht wird.

Weiterhin ist es von Vorteil, wenn die gemeinsame Trennfläche der beiden Schieber im wesentlichen parallel zur Zylinderachse verläuft, und wenn die gemeinsame Trennfläche eine zur seitlichen Ausziehrichtung im wesentlichen parallele Trennebene umfasst.

Bei der erfindungsgemäßen Druckgussform kann zum Ausformen des Auslasskanals ein aus zwei weiteren Schiebern bestehender Kern vorgesehen sein, nämlich ein dritter Schieber mit seitlicher Ausziehrichtung, welcher im wesentlichen einem nach außen mündenden Kanalabschnitt mit geradliniger Strömungsachse entspricht und ein vierter Schieber mit parallel zur Zylinderachse verlaufender Ausziehrichtung, welcher im wesentlichen einem auf der Rückseite des Auslassventils angeordneten Abgasraum entspricht, aus welchem der Kanalabschnitt ausmündet. Hierbei ist es von Vorteil, wenn das innere Ende des Kanalabschnitts ein den Ventilschaft des Auslassventils enthaltendes Kernteil des Zylinderkopfs halbkreisförmig umfasst.

Die Erfindung wird nun anhand eines Ausführungsbeispiels näher erläutert, wobei Bezug auf die beigefügten Zeichnungen genommen wird.

Es zeigen
- Fig. 1: eine Draufsicht auf die dem Zylinder zugewandte Seite eines erfindungsgemäßen Zylinderkopfs;
- Fig. 2: einen zur Zylinderachse parallelen Teilschnitt im Bereich des Einlasskanals durch einen erfindungsgemäßen Zylinderkopf.

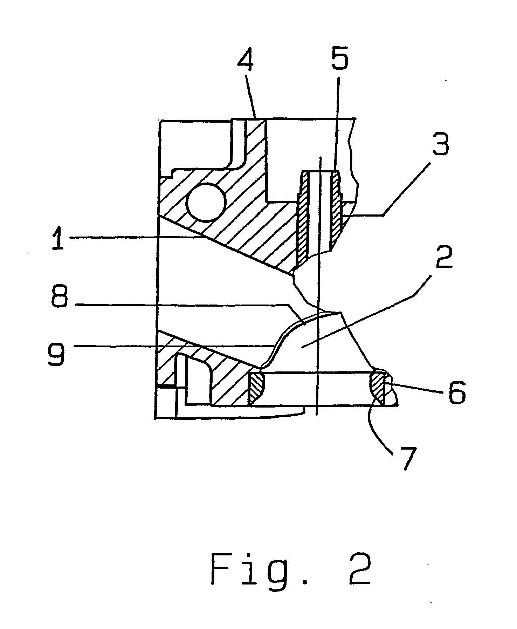

Die Fig. 1 und 2 zeigen jeweils schematische Darstellungen des Zylinderkopfs eines Dieselmotors, wobei der Zylinderkopf so ausgebildet ist, dass er nach dem Druckgussverfahren hergestellt werden kann. Wie Fig. 1, einer Ansicht der zylinderseitigen Unterseite des Zylinderkopfs mit den beiden Stirnseiten 10, 11, zu entnehmen ist, ist der Zylinderkopf mit jeweils einem Einlasskanal, von welchem der Drallraum 2 und der innere Abschnitt des Drallkanals 12 gezeigt sind, und einem Auslasskanal 13 versehen. Der Drallraum 2 ist mit einer Durchgangsbohrung 3 mit einer darin eingebrachten Ventilführungshülse 5 zur Führung des Ventilschafts (nicht gezeigt) des Einlassventils ausgestattet. Das Einlassventil verfügt über eine Ventilsitzbohrung 6, in welcher der Ventilsitz 7 aufgenommen ist, an welchem der Ventilteller in Schließstellung des Einlassventils zur Anlage kommt. Im Einlassventil ist die Drallkante 8 schematisch dargestellt, welche sich durch Einmündung der bezüglich des Dralls krümmungsinnenseitig angeordneten Konturfläche des Drallkanals in den Drallraum 2 ergibt. Ferner ist die Trennlinie 9 eingezeichnet, welche der Umfangslinie der gemeinsamen Stoßflächen der Druckgussschieber (nicht gezeigt) entspricht. Drallkante 8 und Trennlinie 9 sind räumlich voneinander beabstandet. Die Drallkante 8 wird lediglich durch den den Drallraum 2 und den inneren Abschnitt 12 des Drallkanals ausformenden Druckgusschieber ausgeformt.

Die geometrischen Verhältnisse des Einlasskanals werden in Fig. 2, einem zur Zylinderachse parallelen Teilschnitt im Bereich des Einlassventils, anschaulich dargestellt. Aus Fig. 2 ist ersichtlich, wie der Drallkanal 1 in den Drallraum 2 mündet. Ferner ist in Fig 2. die Drallkante 8 und die davon räumlich beabstandete Trennlinie 9 der beiden Druckgussschieber eingezeichnet.

Das Auslassventil des erfindungsgemäßen Zylinderkopfs ist mit dem Auslasskanal 13 zum Abführen der Verbrennungsgase versehen. Der Auslasskanal 13 mündet aus einem auf der Rückseite des Auslassventils angeordneten Abgasraum 19 aus. Das Auslassventil weist ferner eine Durchgangsbohrung 14 mit einer darin eingebrachten Ventilführungshülse 15 zur Führung des Ventilschafts (nicht gezeigt) des Auslassventils auf. Am Auslassventil ist darüber hinaus eine Ventilsitzbohrung 16 ausgebildet, an welcher der Ventilteller in Schließstellung des Auslassventils zur Anlage kommt.

Zur Befestigung des Zylinderkopfs am Kurbelgehäuse mittels Zylinderkopfschrauben ist dieser mit Befestigungsbohrungen 17, 18 versehen.

Das in Fig. 1 und Fig. 2 gezeigte Ausführungsbeispiel für einen erfindungsgemäßen Zylinderkopf betrifft einen Einzylinder-Dieselmotor. Jedoch ist die Erfindung hierauf nicht beschränkt, sondern ist gleichermaßen auf mehrzylindrige Dieselmotoren anwendbar.

## Patentansprüche

1. Verfahren zum Herstellen durch Druckgießen eines einteiligen Zylinderkopfs für einen Dieselmotor mit einem Einlasskanal für die Verbrennungsluft und einem Auslasskanal für das Abgas, wobei der Einlasskanal aus einem auf der Rückseite eines Einlassventils angeordneten Drallraum (2) und einem in den Drallraum tangential mündenden Drallkanal (1) zusammengesetzt ist, wobei ein in Bezug auf den Drall krümmungsaussenseitig angeordneter Außenabschnitt der den Drallkanal (1) umgrenzenden Konturfläche tangential in die den Drallraum (2) umgrenzende Konturfläche übergeht, während ein in Bezug auf den Drall krümmungsinnenseitig angeordneter Innenabschnitt der den Drallkanal (1) umgrenzenden Konturfläche an einer Kante (8) ("Drallkante") in die den Drallraum (2) umgrenzende Konturfläche mündet,
bei welchem Verfahren eine Druckgussform eingesetzt wird, in welcher zum Ausformen des Einlasskanals ein aus zwei Schiebern mit gemeinsamen Trennflächen bestehender Kern eingeschoben wird, nämlich ein erster Schieber mit seitlicher Ausziehrichtung, der im wesentlichen dem Drallkanal (1) entspricht und ein zweiter Schieber mit parallel zur Zylinderachse verlaufender Ausziehrichtung, der im wesentlichen dem Drallraum (2) zuzüglich einem in den Drallraum mündenden inneren Abschnitt (12) des Drallkanals entspricht,
**dadurch gekennzeichnet, dass** durch den zweiten Schieber die Drallkante (8) ausgeformt wird.

2. Druckgussform zur Verwendung in dem Verfahren nach Anspruch 1,
bei welcher zum Ausformen des Einlasskanals ein aus zwei Schiebern mit gemeinsamen Trennflächen bestehender Kern vorgesehen ist, nämlich ein erster Schieber mit seitlicher Ausziehrichtung, der im wesentlichen dem Drallkanal (1) entspricht und ein zweiter Schieber mit parallel zur Zylinderachse verlaufender Ausziehrichtung, der im wesentlichen dem Drallraum (2) zuzüglich einem in den Drallraum mündenden inneren Abschnitt (12) des Drallkanals entspricht,
**dadurch gekennzeichnet,**
**dass** der zweite Schieber eine Negativform für eine an der Mündung des in Bezug auf den Drall krümmungsinnenseitig angeordneten Innenabschnitts der den Drallkanal (1) umgrenzenden Konturfläche in die den Drallraum (2) umgrenzende Konturfläche angeordnete Kante (8) ("Drallkante") aufweist.

3. Druckgussform nach Anspruch 2,
**dadurch gekennzeichnet,**
**dass** eine die gemeinsamen Trennflächen umgebende Trennlinie (9) der beiden Schieber einen Abstand von wenigstens 2 mm von der Negativform der Drallkante (8) aufweist.

4. Druckgussform nach Anspruch 2,
**dadurch gekennzeichnet,**
**dass** der eine Trennfläche umgebende Randbereich einer jeden der gemeinsamen Trennflächen der beiden Schieber wenigstens teilweise abgeschrägt ist, wobei die Abschrägungen der Trennflächen der beiden Schieber als Passformen ausgebildet sind.

5. Druckgussform nach Anspruch 4,
**dadurch gekennzeichnet,**
**dass** die Abschrägungen eine senkrecht zu der eine Trennfläche umgebenden Randlinie gerichtete Breite von wenigstens 2 mm aufweisen.

6. Druckgussform nach Anspruch 2,
**dadurch gekennzeichnet,**
**dass** die gemeinsame Trennfläche der beiden Schieber im wesentlichen parallel zur Zylinderachse verläuft.

7. Druckgussform nach Anspruch 6,
**dadurch gekennzeichnet,**
**dass** die gemeinsame Trennfläche eine zur seitlichen Ausziehrichtung im wesentlichen parallele Trennebene umfasst.

8. Druckgussform nach Anspruch 2,
**dadurch gekennzeichnet,**
**dass** zum Ausformen des Auslasskanals ein aus zwei weiteren Schiebern bestehender Kern vorgesehen ist, nämlich ein dritter Schieber mit seitlicher Ausziehrichtung, welcher im wesentlichen einem nach außen mündenden Kanalabschnitt (13) mit geradliniger Strömungsachse entspricht und ein vierter Schieber mit parallel zur Zylinderachse verlaufender Ausziehrichtung, welcher im wesentlichen einem auf der Rückseite des Auslassventils angeordneten Abgasraum (19) entspricht, aus welchem der Kanalabschnitt (13) ausmündet.

9. Druckgussform nach Anspruch 8,
**dadurch gekennzeichnet,**
**dass** das innere Ende des Kanalabschnitts ein den Ventilschaft des Auslassventils enthaltendes Kernteil des Zylinderkopfs halbkreisförmig umfasst.

## Claims

1. A method for the production, by pressure die casting, of a solid cylinder head for a diesel engine with an intake manifold for the combustion air and an exhaust manifold for the exhaust gas, wherein the intake manifold is composed of a swirl chamber (2) arranged on the rear side of an intake valve and a swirl duct (1) opening tangentially into the swirl chamber, wherein an outer section of the contour surface surrounding the swirl duct (1) and arranged on the outside of the curvature in relation to the swirl passes tangentially into the contour surface surrounding the swirl chamber (2), whilst an inner section of the contour surface surrounding the swirl duct (1) and arranged on the inside of the curvature in relation to the swirl opens on one edge (8) (the "swirl edge") into the contour surface surrounding the swirl chamber (2),
in which method use is made of a die casting mould in which a core, consisting of two slides with common projected areas, is inserted to form the intake manifold, namely a first slide with a lateral withdrawal direction, which corresponds essentially to the swirl duct (1), and a second slide with an withdrawal direction running parallel to the cylinder axis, which slide corresponds essentially to the swirl chamber (2) in addition to an inner section (12) of the swirl duct opening into the swirl chamber,
**characterised in that** the swirl edge (8) is formed by the second slide.

2. A die casting mould for use in the method according to Claim 1,
in which a core consisting of two slides with common projected areas is provided for forming the intake manifold, namely a first side with a lateral withdrawal direction, which corresponds essentially to the swirl duct (1), and a second slide with an withdrawal direction running parallel to the cylinder axis, which slide corresponds essentially to the swirl chamber (2) in addition to an inner section (12) of the swirl duct opening into the swirl chamber,
**characterised in that**
the second slide has a negative shape for an edge (8) ("swirl edge") arranged on the opening of the inner section of the contour surface surrounding the swirl duct (1) into the contour surface surrounding the swirl chamber (2), which inner section is arranged on the inside of the curvature in relation to the swirl.

3. The die casting mould according to Claim 2,
**characterised in that**
a parting line (9) of the two slides, surrounding the common projected areas, has a distance of at least 2 mm from the negative shape of the swirl edge (8).

4. The die casting mould according to Claim 2,
**characterised in that**
the edge region of each of the common projected areas of the two slides, which edge region surrounds the projected area, is at least partially bevelled, wherein the bevels of the projected areas of the two slides are designed as fitting shapes.

5. The die casting mould according to Claim 4,
**characterised in that**
the bevels have a width of at least 2 mm directed perpendicularly to the edge line surrounding a projected area.

6. The die casting mould according to Claim 2,
**characterised in that**
the common projected area of the two sides runs essentially parallel to the cylinder axis.

7. The die casting mould according to Claim 6,
**characterised in that**
the common projected area comprises a parting lane running essentially parallel to the lateral withdrawal direction.

8. The die casting mould according to Claim 2,
**characterised in that**
a core consisting of two further slides is provided for forming the exhaust manifold, namely a third slide with a lateral withdrawal direction, which slide corresponds essentially to an outwardly opening duct section (13) with a rectilinear axis of flow, and fourth slide with a withdrawal direction running parallel to the cylinder axis, which slide corresponds essentially to an exhaust gas chamber (19) arranged on the back of the exhaust valve, from which chamber the duct section (13) discharges.

9. The die casting mould according to Claim 8,
**characterised in that**
the inner end of the duct section comprises, in semicircular fashion, a core section of the cylinder head containing the valve stem of the exhaust valve.

## Revendications

1. Procédé pour fabriquer par moulage sous pression, une culasse monobloc destinée à des moteurs diesel et comprenant un canal d'admission pour l'air de combustion et un canal d'échappement pour les gaz d'échappement, culasse dans laquelle
- le canal d'admission est constitué par l'assemblage d'une chambre de giration (2) située sur le côté arrière d'une soupape d'admission et d'un canal de giration (1) débouchant tangentiellement dans cette chambre,
- une partie externe, disposée vers l'extérieur par rapport à la courbure du mouvement de giration, de la surface du contour enveloppant le canal de giration (1), se poursuit dans la surface du contour délimitant la chambre de giration (2), tandis qu'une partie interne, disposée vers l'intérieur par rapport à la courbure du mouvement de giration, de la surface du contour enveloppant le canal de giration (1), débouche le long d'une arête (8) (arête de giration) dans la surface du contour enveloppant la chambre de giration (2),
étant précisé que ce procédé utilise un moule de coulée sous pression dans lequel, pour mouler le canal d'admission, est introduit par coulissement un noyau constitué de deux tiroirs présentant des surfaces de séparation communes, à savoir un premier tiroir dont la direction d'extraction est latérale et qui correspond essentiellement au canal de giration (1), et un second tiroir dont la direction d'extraction est parallèle à l'axe du cylindre et qui correspond essentiellement à la chambre de giration (2), et en plus à une partie (12) interne au canal de giration débouchant dans la chambre de giration, **caractérisé en ce que** l'arête de giration (8) est moulée par le second tiroir.

2. Moule de coulée sous pression pour la mise en oeuvre du procédé selon la revendication 1, dans lequel pour mouler le canal d'admission, est introduit par coulissement un noyau constitué de deux tiroirs présentant des surfaces de séparation communes, à savoir un premier tiroir dont la direction d'extraction est latérale et qui correspond essentiellement au canal de giration (1), et un second tiroir dont la direction d'extraction est parallèle à l'axe du cylindre et qui correspond essentiellement à la chambre de giration (2), et en plus à une partie (12) interne au canal de giration débouchant dans la chambre de giration, **caractérisé en ce que** le second tiroir présente une forme négative pour une arête (8) (arête de giration) disposée dans la surface du contour délimitant la chambre de giration (2), sur l'embouchure de la partie interne située vers l'intérieur par rapport à la courbure du mouvement de giration, de la surface du contour enveloppant le canal de giration (1).

3. Moule de coulée sous pression selon la revendication 2, **caractérisé en ce qu'**une ligne de séparation (9) des deux tiroirs, qui entoure les surfaces de séparation communes, est espacée d'au moins 2 mm de la forme négative de l'arête de giration (8).

4. Moule de coulée sous pression selon la revendication 2, **caractérisé en ce que** la zone marginale enveloppant chacune des surfaces de séparation communes des deux tiroirs est chanfreinée au moins en partie, les chanfreins des surfaces de séparation des deux tiroirs ayant des formes ajustées.

5. Moule de coulée sous pression selon la revendication 4, **caractérisé en ce que** les chanfreins présentent, perpendiculairement à la ligne marginale entourant une surface de séparation, une largeur d'au moins 2 mm.

6. Moule de coulée sous pression selon la revendication 2, **caractérisé en ce que** la surface de séparation commune des deux tiroirs est essentiellement parallèle à l'axe du cylindre.

7. Moule de coulée sous pression selon la revendication 6, **caractérisé en ce que** la surface de séparation commune comprend un plan de séparation essentiellement parallèle à la direction latérale d'extraction.

8. Moule de coulée sous pression selon la revendication 2, **caractérisé en ce que** pour mouler le canal d'échappement, il est prévu un noyau composé de deux autres tiroirs, à savoir un troisième tiroir à direction d'extraction latérale, correspondant essentiellement à une section de canal (13) débouchant vers l'extérieur avec un axe d'écoulement rectiligne, ainsi qu'un quatrième tiroir à direction d'extraction parallèle à l'axe du cylindre, correspondant essentiellement à une chambre de gaz d'échappement (19) située sur la face arrière de la soupape d'échappement et d'où débouche la section de canal (13).

9. Moule de coulée sous pression selon la revendication 8, **caractérisé en ce que** l'extrémité intérieure de la section de canal entoure en forme de demi-cercle une partie de noyau de la culasse qui contient la tige de la soupape d'échappement.
